# NEW EUROPEAN PATENT SPECIFICATION

(11) **EP 0 555 257 B2**
(45) Date of publication and mention of the opposition decision: **18.10.2000**
(45) Mention of the grant of the patent: 28.06.1995
(21) Application number: 91918219.6
(22) Date of filing: 31.10.1991
(51) Int. Cl.: F26B 3/347, C04B 41/00, E04B 1/70

(54) **DRYING PROCEDURE**
TROCKNUNGSVERFAHREN
PROCEDE DE DESSICATION

(30) Priority: 05.11.1990 FI 905484
(43) Date of publication of application: 18.08.1993
(73) Proprietor: ELMATEC OY, SF-00940 Helsinki (FI)
(72) Inventor: NAPARI, Jukka, SF-54850 Kuukanniemi (FI)
(74) Representative: Svensson, Johan Henrik
(86) International application number: FI9100330
(87) International publication number: WO9208084

(56) References cited:
- DE-A- 2 854 263
- DE-A- 3 518 914
- FR-A- 2 634 412
- US-A- 3 970 404
- US-A- 4 175 885
- CHEMICAL ABSTRACT, Volume 106, No. 87, 1900, (Columbus, Ohio, US), see page 316, Abstract 107084q, & JP 61227976 (HATANO, TETSUO et al) 11 October 1986
- IVO Research Report IVO-A-04/86, Siimes, H., Tarvainen, V., Peräniitty, M.: SUURTAAJUUSKUIVAUKSEN KÄYTTÖMAHDOLLISUUDET MEKAANISESSA METSÄTEOLLISUUDESSA, Imatran Voima Oy, Helsinki lokakuu 1986
- CHEMICAL ABSTRACT, Volume 106, No. 87, 1900, (Columbus, Ohio, US), see page 316, Abstract 107084q, & JP,, 61227976 (HATANO, TETSUO et al) 11 October 1986.

## Description

The present invention concerns a process for the non-destructive drying out of water damaged building structures made of concrete, stone or brick material, wherein on the water damaged building structure is directed microwave radiation dewatering the building structure by heating.

Such a drying process is known from US-A-4175885.

The drying of concrete in various applications to a condition fit to be coated may take several months. In order to accelerate the drying, it is present practice to use various heat blowers and infra-red radiators by means of which the surface of the drying concrete is heated and water is evaporated therefrom. Mainly the same, above-mentioned methods are also applied in repairing various occurrences of water-induced damage in concrete structures and equivalent.

The problem with existing concrete-drying methods is their slow progress and their comparatively high energy requirements. The greater part of the warm air and of the thermal radiation has not time to exert its effect on the concrete that is being dried: it is dissipated into ambient space, along with air currents. Similarly, in various instances of damage caused to concrete structures by water, the drying operation may take several months, thus causing significant problems and costs to those who are using the premises in question.

DE 3518914, US 4175885 and FR 2634412 show drying procedures using microwaves for radiation. However these methods are not suitable for non-destructive drying out of water damaged building structures on concrete.

The object of the invention is to eliminate the drawbacks just mentioned. It is particularly an object of the invention, to provide a novel drying procedure which enables water damaged building structures to be dried with less energy consumption, than is possible in prior art.

As regards the features characterizing the invention, reference is made to Claim 1.

Concrete is composed of sand, cement and water. The proportion of sand is, depending on the grade of the concrete, about 82% by weight, that of cement is about 10% by weight, and that of water is about 8% by weight. Part of the water becomes chemically bound in the concrete, as the concrete slowly gains its rated strength. On concluded chemical binding there remains loose water in the concrete in the amount of about 5% by weight The relative moisture content of the concrete is then 100%. The aim with the procedure of the invention is to remove this loose water to such degree that the relative moisture content of the concrete will be lowered to the level implied by the future treatment of the concrete. For instance, when concrete is overlaid with parquetry, without using any moisture barrier, the relative moisture content of the concrete should be less than 60%, whereby correspondingly the moisture in % by weight should be less than 3.

In the drying procedure of the invention, the structure having a concrete, stone, brick and/or block base is not broken up or severed in any way whatsoever: its surface is subjected to microwave radiation, which penetrates into the structures containing moisture and evaporates the moisture and drives it out. According to the invention the microwave radiation is directed into the structure to be dried as a plurality of consecutive similar drying periods and pauses thereinbetween, so that the temperature of the object stays substantially on a given level throughout the drying process.

As has been found in studies that were carried out, the radiation mainly boils the water out from the structures, in a progressing zone from the surface towards the interior of the structure, at the same time pressing the water through the structure and out therefrom.

When treating extensive surfaces, such as floors and walls, in an advantageous embodiment of the invention the radiation is directed at the same time on the whole area to be dried, in the form of substantially uniform radiation. Hereby the warming-up of the object to be dried, ensuing in the course of the drying operation, will take place uniformly, and no cracks due to thermal expansion will appear in the structure.

Since the objects to be dried may be even great in size, it may be difficult to irradiate the whole object at the same time. Therefore in one embodiment the radiation is only directed on part of the surface of the object to be dried at a time and the radiation source is shifted either periodically over the whole surface or at a uniform rate, so that the whole surface in question will be gone over.

Various periodic and partial drying steps are regulated and controlled in accordance with the temperature of the object to be dried. When the whole object is dried at the same time, its temperature may be increased up to a certain value which the structure can well withstand and it may be held at this height substantially throughout the drying process, by intermittently shutting the radiation off altogether.

When such irradiators are used which treat only part of the object to be dried, at a time, the object to be dried may be warmed with them stepwise up to the desired drying temperature so that no excessive differential temperatures will build up between different areas of the object to be dried which could through different thermal expansions result in cracking of the object.

The procedure of the invention may be applied in various instances of water damage which old structures have suffered, in which case, since the concrete structures have already attained their final strength they can be irradiated more strongly than new concrete and they can therefore be dried in comparatively short time. The procedure of the invention may also be used to dry structures composed of various blocks and bricks, and their joints.

The drying apparatus that can be used in the procedure of the invention comprises a radiation chamber which is open towards the surface of the object to be dried, and substantially closed in other directions; at least one microwave source aimed inside said chamber and towards the object such as a magnetron, with regulating and control apparatus; and a ventilating means disposed inside or outside the chamber in communication with the interior space defined by the chamber, to cool the magnetrons and to ventilate the moisture evaporating from the object to be dried.

Advantageously, on the chamber are provided wheels with the aid of which it can be moved about on the surface of the object to be dried and which keep the chamber sufficiently close to the object to be dried so that only a minimal gap is left between the margins of the chamber and the surface of the object to be dried, through which no objectionable radiation quantity can escape into the ambience. Advantageously, safety switches are also provided in the vicinity of the chamber's lower margins, which immediately cut out the magnetrons when the chamber is lifted off the surface.

It should be noted that although in this disclosure only a magnetron is mentioned as microwave source, it is possible in the invention to use any radiation source whatsoever which supplies microwave at sufficient intensity.

The advantage afforded by the invention over the state of art is that the drying of objects is made faster and less energy-consuming than what is feasible with existing methods.

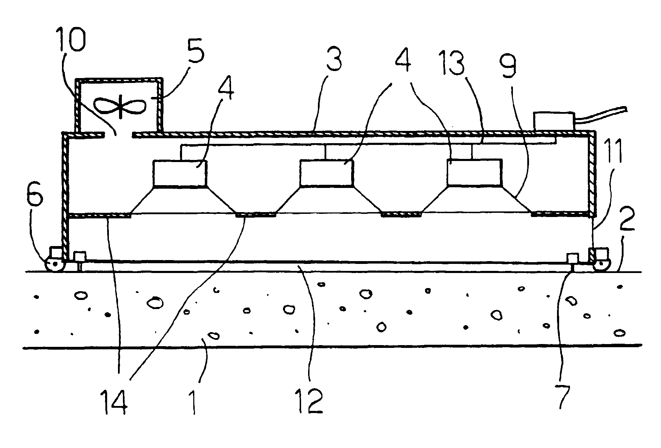

In the following the invention is described in detail with the aid of the accompanying drawing, in which a drying apparatus that can be used according to the invention is presented, schematically and partly in section.

A drying apparatus depicted in the drawing, comprises a radiation chamber 3 substantially in the shape of a rectangular parallelepipedon, a box which is open in the direction facing the surface 2 of the object to be dried 1 but otherwise is a substantially enclosed construction. In the present embodiment inside the radiation chamber have been provided, substantially at equal spacing, three magnetrons 4, together with their reflector cones 9 aimed towards the object to be treated, 1. The magnetrons are connected to a joint control and power circuit 13, which can be connected to an external power source. It is essential in this design that the reflector cones and the magnetrons, respectively, are dearly spaced from the surface to be dried, whereby the radiations from different magnetrons will partly overlap and the radiation can act in substantially uniform manner all over the surface to be dried which is delimited by the chamber.

In the drawing, the magnetrons and, respectively, the reflector cones, are braced against each other and against the walls of the chamber 3 with a supporting structure 14, which does not interfere with the air currents between magnetrons. Accordingly, in the top cover of the radiation chamber 3 is provided an aperture 10, in conjunction with which has been provided a ventilation means 5 so that this means will blow air into the radiation chamber to cool the magnetrons 4. On one wall of the radiation chamber is provided an exhaust aperture 11 fitted with wire netting substantially impermeable to microwave radiation, through which the ventilation air can flow out from the radiation chamber. In this way, at the same time, the ventilation means 5 removes from the radiation chamber moisture that has evaporated from the surface 2 which is being treated.

Furthermore on the lower margins of the radiation chamber, e.g. adjacent to all four corners, wheels 6 have been mounted, with the aid of which the radiation chamber is easy to move about on the surface 2 of the object 1 to be treated. The wheels have been mounted so that they maintain the radiation chamber above the surface that is being treated, however with a gap 12 so narrow that microwave radiation is not admitted therethrough into ambience in any objectionable quantity. Moreover there have been provided safety switches 7 on the lower margin of the radiation chamber, e.g. adjacent to each wheel, which immediately deenergize the magnetrons 4 if the radiation chamber is lifted up, off the surface 2 of the object 1 to be dried. This is how access of harmful radiation to the space surrounding the drying means is prevented.

In practice, the drier with three magnetrons depicted in the figure has a length of about 1 m and it is about 1/3 m wide. It is possible to deposit several such units side by side and after each other on the surface to be dried, whereby they cover a greater area of the surface to be dried. However, care must be taken to ensure free ventilation air flow.

## Claims

1. A process for the non-destructive drying out of water damaged building structures (1) made of concrete, stone or brick material, wherein on the water damaged building structure (1) is directed microwave radiation dewatering the building structure by heating, **characterized** in that the heating is carried out by directing into the water damaged building structure (1) as the only heating source microwave radiation in the form of a plurality of consecutive similar drying periods and non-heating pauses thereinbetween, keeping the temperature of the water damaged building structure (1) substantially on a given level throughout the drying process.

2. Process according to claim 1, **characterized** in that the radiation is directed to the whole surface area of the water damaged building structure.

3. Process according to claim 1, **characterized** in that the radiation is directed on part of the surface area (2) of the water damaged building structure (1) and is moved over the surface area (2) of the water damaged building structure periodically.

## Patentansprüche

1. Verfahren zum nichtzerstörerischen Trocknen von wassergeschädigten Bauwerkstrukturen (1) aus Beton, Stein oder Ziegeln, bei dem Mikrowellenstrahlung auf die wassergeschädigte Bauwerkstruktur (1) gerichtet wird, so daß diese durch Wärme entwässert wird, dadurch **gekennzeichnet**, daß die Erwärmung ausgeführt wird, indem Mikrowellenstrahlung als die einzige Wärmequelle in die wassergeschädigte Bauwerkstruktur (1) gerichtet wird, in der Form einer Vielzahl aufeinander folgender ähnlicher Trocknungsperioden und dazwischen liegender heizungsfreier Pausen, wobei die Temperatur der wassergeschädigten Bauwerkstruktur (1) während des gesamten Trocknungsprozesses im wesentlichen auf einem gegebenen Niveau gehalten wird.

2. Verfahren nach Anspruch 1, dadurch **gekennzeichnet**, daß die Strahlung auf die gesamte Fläche der wassergeschädigten Bauwerkstruktur gerichtet wird.

3. Verfahren nach Anspruch 1, dadurch **gekennzeichnet**, daß die Strahlung auf einen Teil der Oberfläche (2) der wassergeschädigten Bauwerkstruktur (1) gerichtet und periodisch über die Oberfläche (2) der wassergeschädigten Bauwerkstruktur bewegt wird.

## Revendications

1. Procédé pour le dessèchement non destructeur de constructions (1) de bâtiment en béton, pierre ou brique qui ont subi des dégâts causés par les eaux, la construction (1) de bâtiment étant exposée à une radiation micro-ondes de dessication de la construction de bâtiment par chauffage, **caractérisé** en ce que le chauffage est effectué en exposant la construction (1) de bâtiment à une radiation micro-ondes comme seule source de chaleur sous la forme de plusieurs périodes de séchage similaires consécutives séparées par des intervalles de non-séchage, tout en maintenant la température de la construction (1) de bâtiment ayant subi des dégâts des eaux sensiblement à une niveau donné pendant tout le processus de séchage.

2. Procédé selon la revendication 1, **caractérisé** en ce que la surface entière de la construction de bâtiment ayant subi des dégâts des eaux est exposée à la radiation.

3. Procédé selon la revendication 1, **caractérisé** en ce qu'une partie de la surface de la construction (1) de bâtiment ayant subi des dégâts des eaux est soumise à la radiation, la radiation étant déplacée périodiquement sur la surface (2) de la construction de bâtiment ayant subi des dégâts des eaux.
